# EUROPÄISCHE PATENTANMELDUNG

(11) **EP 1 884 672 A2**
(43) Veröffentlichungstag der Anmeldung: **06.02.2008**
(21) Anmeldenummer: 07013225.3
(22) Anmeldetag: 06.07.2007
(51) Int. Cl.: F16D 1/095

(54) **Schrumpfring**

(30) Priorität: 31.07.2006 DE 102006035946
(71) Anmelder: A. FRIEDR. FLENDER AG, D-46395 Bocholt (DE)
(72) Erfinder: Gödde, Peter, Dr., 46286 Dorsten (DE); Jansen, Andre, 46325 Borken (DE); Peters, Robert, 46399 Bocholt (DE)
(74) Vertreter: Radünz, Ingo

(57) **Zusammenfassung**

Es wird eine Schrumpfscheibe angegeben, die eine Pressverbindung vorzugsweise zwischen zwei konzentrischen Wellen herstellt. Die Schrumpfscheibe besteht aus einem Innenring (4) und einem Außenring (5), die entlang einer kegeligen Berührungsfläche (6) über eine Verschraubung gegeneinander verspannbar angeordnet sind. Dabei sind der Innenring (4) und / oder der Außenring (5) aus einem Gusseisenwerkstoff gefertigt.

## Beschreibung

Die Erfindung betrifft eine Schrumpfscheibe mit den Merkmalen des Oberbegriffes des Anspruches 1.

Mit Hilfe einer derartigen Schrumpfscheibe wird eine Pressverbindung zwischen einer Hohlwelle und einer Steckwelle geschaffen. Zur Erzeugung der Pressverbindung werden der Innenring und der Außenring der Schrumpfscheibe über die kegelige Berührungsfläche zwischen den Ringen gegeneinander verschoben und dadurch verspannt, wobei der Innenring und der Außenring elastisch oder elastisch plastisch verformt werden. Die Pressverbindung kann Drehmomente, Biegemomente und Kräfte übertragen. Wesentlich für die Moment- bzw. Kraftübertragung ist der durch die Schrumpfscheibe erzeugte Fugendruck zwischen der Hohlwelle und der Steckwelle sowie der Reibwert an dieser Stelle. Als Werkstoff für die Schrumpfscheibe wird Stahl verwendet.

Der Erfindung liegt die Aufgabe zugrunde, die gattungsgemäße Schrumpfscheibe kostengünstiger herzustellen.

Die Aufgabe wird bei einer gattungsgemäßen Schrumpfscheibe erfindungsgemäß durch die kennzeichnenden Merkmale des Anspruches 1 gelöst. Vorteilhafte Ausgestaltungen der Erfindung sind Gegenstand der Unteransprüche.

Mit dem Gusseisenwerkstoff, insbesondere mit dem Sphäroguss, wird ein Werkstoff zur Herstellung von Schrumpfscheiben zur Verfügung gestellt, der für den vorgesehenen Verwendungszweck kostengünstiger ist als Stahl. Es hatte sich überraschend herausgestellt, dass der Gusseisenwerkstoff in Bezug auf die Belastung des Innenringes und des Außenringes vergleichbare oder günstigere Eigenschaften aufweist als der bisher verwendete Stahl. Bei gleicher oder besserer Funktionsweise der Schrumpfscheibe lässt sich damit die erfindungsgemäße Schrumpfscheibe kostengünstiger herstellen.

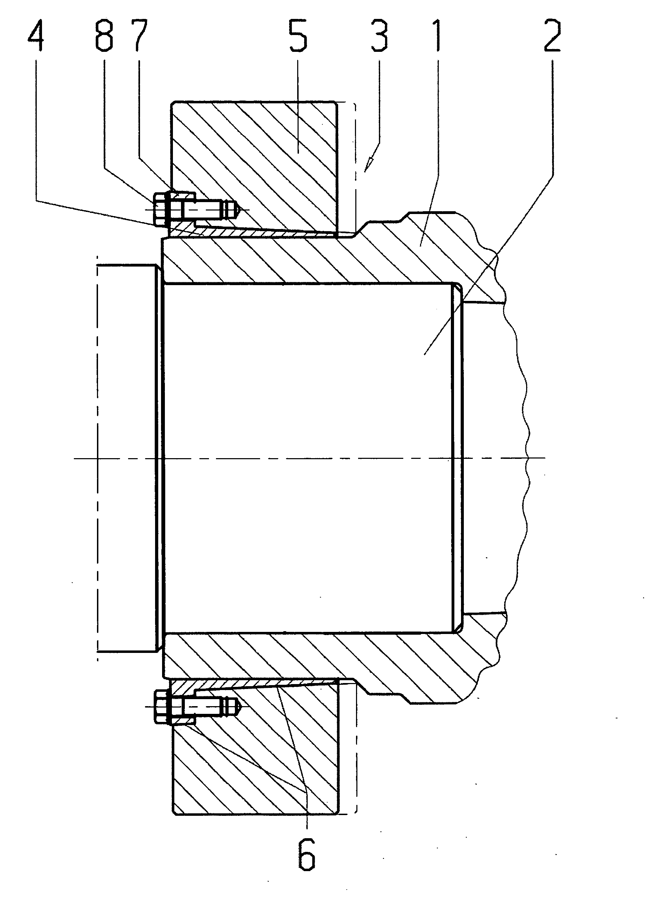

Ein Ausführungsbeispiel der Erfindung ist in der Zeichnung dargestellt und wird im folgenden näher erläutert.

Die Zeichnung zeigt einen Querschnitt durch eine Schrumpfscheibe.

In eine vorzugsweise mit einer Arbeits- oder Antriebsmaschine verbundene Hohlwelle 1 ist eine beispielsweise mit einem Getriebe verbundene Steckwelle 2 gesteckt. Auf die Verbindungsstelle von Hohlwelle 1 und Steckwelle 2 ist eine Schrumpfscheibe 3 aufgeschoben, die aus einem Innenring 4 und einem Außenring 5 besteht.

Der Innenring 4 ist auf einem Teil seines Außenumfangs mit einer kegeligen Berührungsfläche 6 ausgebildet, die an einer entsprechend geformten Kegelfläche des Außenringes. 5 anliegt. Weiterhin ist der Innenring 4 mit einem Vorsprung 7 versehen, der in eine entsprechende Ausnehmung des Außenringes 5 eingreift.

Durch den Vorsprung 7 des Innenringes 4 sind mehrere Spannschrauben 8 geführt, die jeweils in ein im Außenring 5 angebrachtes Innengewinde eingreifen. Durch ein Anziehen der Spannschrauben 8 wird der Außenring 5 entlang der kegeligen Berührungsfläche 6 verschoben, bis die Stirnflächen von Innenring 4 und Außenring 5 bündig sind. Dabei werden der Innenring 4 und der Außenring 5 unter elastischer Verformung verspannt, wodurch ein Presssitz der Hohlwelle 1 auf der Steckwelle 2 erzeugt wird.

Der Innenring 4 und der Außenring 5 sind vorzugsweise aus einem Gusseisenwerkstoff gefertigt. Als Gusseisenwerkstoff wird bevorzugt gegebenenfalls vergüteter Sphäroguss verwendet. Vorteilhafterweise kann ein wärmebehandelter duktiler Sphäroguss (Austempered Ductile Iron = ADI) eingesetzt werden. Darüber hinaus kann auch bevorzugterweise ein vergüteter Grauguss verwendet werden.

## Patentansprüche

1. Schrumpfscheibe zum Herstellen einer Pressverbindung vorzugsweise zwischen zwei konzentrischen Wellen, bestehend aus einem Innenring (4) und einem Außenring (5), die entlang einer kegeligen Berührungsfläche (6) über eine Verschraubung gegeneinander verspannbar angeordnet sind, **dadurch gekennzeichnet, dass** der Innenring (4) und / oder der Außenring (5) aus einem Gusseisenwerkstoff gefertigt sind.

2. Schrumpfscheibe nach Anspruch 1, **dadurch gekennzeichnet, dass** der Gusseisenwerkstoff ein Sphäroguss ist.

3. Schrumpfscheibe nach Anspruch 1, **dadurch gekennzeichnet, dass** der Gusseisenwerkstoff ein vergüteter Sphäroguss ist.

4. Schrumpfscheibe nach Anspruch 3, **dadurch gekennzeichnet, dass** der Gusseisenwerkstoff ein wärmebehandelter duktiler Sphäroguss ist.

5. Schrumpfscheibe nach Anspruch 1, **dadurch gekennzeichnet, dass** der Gusseisenwerkstoff ein Grauguss ist.

6. Schrumpfscheibe nach Anspruch 1, **dadurch gekennzeichnet, dass** der Gusseisenwerkstoff ein vergüteter Grauguss ist.
